(19) Europäisches Patentamt
European Patent Office
Office européen des brevets

(11) **EP 4 187 115 B1**

(12) **FASCICULE DE BREVET EUROPEEN**

(45) Date de publication et mention
de la délivrance du brevet:
**03.07.2024 Bulletin 2024/27**

(21) Numéro de dépôt: **22208178.8**

(22) Date de dépôt: **17.11.2022**

(51) Classification Internationale des Brevets (IPC):
**F16B 25/00** (2006.01)    **F16B 33/06** (2006.01)
**F16B 37/04** (2006.01)

(52) Classification Coopérative des Brevets (CPC):
**F16B 25/0026; F16B 33/06; F16B 37/04**

(54) **PITON DE SUSPENSION PERFECTIONNÉ**

VERBESSERTE AUFHÄNGEVORRICHTUNG

IMPROVED SUSPENSION DOWEL

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **30.11.2021 FR 2112725**

(43) Date de publication de la demande:
**31.05.2023 Bulletin 2023/22**

(73) Titulaire: **François Inglese
43000 Le Puy (FR)**

(72) Inventeur: **INGLESE, François
43120 MONISTROL SUR LOIRE (FR)**

(74) Mandataire: **Cabinet Laurent & Charras
CS 70 203
15 rue Camille de Rochetaillée
42005 Saint-Etienne Cedex 1 (FR)**

(56) Documents cités:
**EP-A1- 3 751 158     FR-A1- 2 521 235
FR-A1- 2 838 485     FR-A1- 3 038 354**

## Description

## Domaine technique

L'invention se rattache au secteur technique des éléments de fixation dans le bâtiment et concerne plus particulièrement un piton dit de suspension.

## Art antérieur

Ce type de piton est parfaitement connu pour un homme du métier. Pour l'essentiel, ce piton comprend un corps cylindrique constituant une vis à bois pour taraudeuse, généralement de 6 x 60 mm, présentant à l'une de ses extrémités une tête hexagonale, par exemple de 10 mm, avec un taraudage femelle M6, M7 ou M8, destinée à recevoir une tige filetée. Cette tige filetée a une longueur adaptée à la configuration, par exemple d'éléments de poutre en bois, et est destinée à recevoir des éléments d'une ossature, par exemple, pour la fixation d'un faux-plafond.

Ce même type de piton existe également dans une configuration, non plus femelle, mais dans une configuration mâle, en ce sens que la tête hexagonale est remplacée par une portée cylindrique filetée pour le vissage de la tige. Une portée hexagonale est formée entre cette portée cylindrique filetée, et la portée de vissage du piton.

Quelle que soit sa forme de réalisation, ce type de piton est, le plus souvent, destiné à être fixé sur un support bois, par exemple des poutres.

En revanche, pour certaines applications, lorsqu'il est nécessaire de fixer ce piton dans du béton, il convient préalablement de percer dans le béton un trou de diamètre 8 mm pour la mise en place d'une cheville, par exemple métallique, taraudée au moyen d'un outil.

Il résulte donc de cet état de la technique que ce type de piton, réalisé en acier, ne peut pas être vissé directement dans le béton, mais nécessite préalablement la mise en place d'une cheville, ce qui augmente les coûts et les temps de pose.

Le Demandeur s'est déjà proposé de remédier à ces inconvénients en concevant le piton décrit dans le document FR3038354.

Ce piton comprend une portée cylindrique auto-taraudeuse, dont l'une des extrémités présente une tête agencée pour le vissage d'une tige filetée apte à recevoir un élément tel qu'une ossature pour faux plafond, et est soumis à un traitement de dureté du type carbonitruration pour être vissé directement dans du béton sans l'utilisation d'une cheville.

Le diamètre de la portée cylindrique correspond à un perçage de 5 mm dans le béton.

Ainsi, il résulte de ces caractéristiques que le fait de percer à 5 mm, et non plus à 8 mm, permet de supprimer la cheville, et par conséquent, de travailler plus rapidement, avec moins de fatigue.

Le Demandeur a également développé un tel piton, plus résistant, dont le diamètre de la portée cylindrique correspond à un perçage de 5,5 mm dans le béton.

L'inconvénient devient donc la nécessité de percer le mur en béton avec un diamètre de 5,5mm. En pratique, le Demandeur fournit un foret de perçage de 5,5 mm de diamètre en même temps que le piton, vu que le diamètre n'est pas standard.

Il est également connu le document FR2521235 qui enseigne la formule suivante :

$$D2 = 0,9 \times D1$$

Avec D2 = le diamètre de perçage dans le béton
D1, le diamètre nominal du piton.

## Exposé de l'invention

L'invention s'est fixée pour but de remédier à ces inconvénients d'une manière simple, sûre, efficace et rationnelle en fournissant un piton dit de suspension, qui permet de supprimer la cheville, et par conséquent, de travailler plus rapidement, avec moins de fatigue, sans foret spécifique, tout en présentant une résistance accrue.

A cet effet, il a été mis au point un piton comprenant une portée cylindrique filetée auto-taraudeuse, dont une extrémité présente une tête agencée pour le vissage d'une tige filetée apte à recevoir un élément, tel qu'une ossature pour faux plafond.

Le piton est soumis à un traitement de dureté du type carbonitruration pour être vissé directement dans du béton sans l'utilisation d'une cheville.

Selon l'invention, le diamètre nominal de la portée cylindrique filetée auto-taraudeuse, c'est-à-dire filet compris, est de 6,9 mm, ce qui permet d'accroitre la résistance du piton, de supprimer la cheville, et par conséquent, de travailler plus rapidement, avec moins de fatigue, et notamment de percer le béton avec un diamètre 6 mm, standard.

La démarche du Demandeur a été d'effectuer un travail de recherche et des investissements importants en allant à l'encontre des connaissances générales de l'homme du métier, illustrées par le document FR2521235, selon lesquelles le diamètre nominal du piton aurait été D1 = 0.9 x 6 = 6,66mm, ce qui est différent de l'objet revendiqué.

Or le Demandeur est allé à l'encontre de cet enseignement et a conçu un piton avec un diamètre nominal de 6,9 mm, et pour lequel il obtient l'effet escompté.

La longueur de la portée cylindrique est de 35 mm, pour s'adapter aux dalles béton préfabriquées de faible épaisseur.

Le pas du filet de la portée cylindrique filetée auto-taraudeuse a aussi été étudié et est de préférence de 3,2 mm pour offrir la meilleure accroche dans le béton.

La pointe de la portée cylindrique filetée auto-taraudeuse présente, définit quant à elle un angle de 45°.

Comme indiqué dans l'analyse de l'état antérieur de la technique, le piton peut être du type femelle, ou du type mâle, de sorte que la tête agencée pour le vissage de la tige filetée peut être réalisée selon deux formes de réalisations différentes, à savoir :

- soit la tête est du type femelle, en étant constituée par portée hexagonale présentant un taraudage interne pour le vissage de ladite tige,
- soit la tête est du type mâle, en étant constituée par une portée cylindrique filetée pour le vissage de ladite tige, une portée hexagonale étant formée entre ladite portée cylindrique filetée et la portée cylindrique filetée auto-taraudeuse.

Le taraudage interne dans le cas d'une tête femelle, ou la portée cylindrique filetée dans le cas d'une tête mâle sont présents sur une longueur d'au moins 11 mm.

**Brève description des dessins**

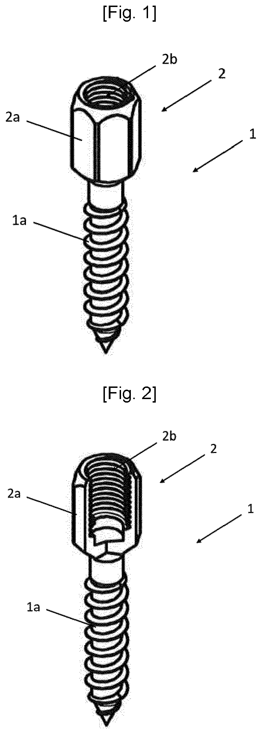

[Fig.1] est une vue en perspective du piton perfectionné de l'invention.

[Fig.2] est une vue similaire à celle de la figure 1, avec une coupe axiale partielle au niveau de la tête du piton.

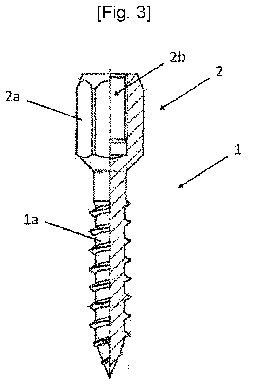

[Fig.3] est une vue en plan et en demi-coupe axiale.

**Description détaillée de l'invention**

De manière classique, le piton (1) selon l'invention, plus communément connu sous le nom de piton de rénovation, comprend une portée cylindrique filetée auto-taraudeuse (1a), dont l'une des extrémités présente une tête (2) agencée pour le vissage d'une tige filetée, non représentée. Cette tige est destinée à recevoir un élément tel qu'une ossature pour, par exemple, la fixation d'un faux-plafond, collier de plombier embase M7, ou collier isophonique série lourde embase M8.

Toujours de manière connue, la tête (2) peut être du type femelle, telle qu'illustrée, en étant constituée par une portée hexagonale (2a) présentant un taraudage interne (2b) pour le vissage de la tige filetée, présent de préférence sur une longueur d'au moins 11 mm. Le taraudage femelle est par exemple M6 pour le faux plafond, M7 pour le collier de plombier embase M7 ou M8 pour le collier isophonique série lourde embase M8.

Ou bien, de manière non représentée, la tête (2) est du type mâle, en étant constituée par une portée cylindrique filetée, présent de préférence sur une longueur d'au moins 11 mm, pour le vissage de la tige filetée, qui dans ce cas présente une extrémité taraudée. Dans cette configuration, une portée hexagonale de manoeuvre est formée entre la portée filetée et la portée cylindrique filetée auto-taraudeuse (1a).

Selon une caractéristique à la base de l'invention, le piton (1), tel que défini, et ce, quelle que soit sa forme de réalisation, c'est-à-dire, du type femelle ou mâle, est soumis à un traitement de dureté, du type carbonitruration.

Il en résulte que le piton (1) peut être vissé directement dans le béton, sans l'utilisation d'une cheville, comme rappelé dans l'analyse de l'état antérieur de la technique.

Par ailleurs, la longueur de la portée cylindrique auto-taraudeuse (1a) est de 35. Le pas du filet de la portée cylindrique filetée auto-taraudeuse (1a) est de 3,2 mm, et la pointe définit un angle de 45°.

Selon une caractéristique à la base de l'invention, le diamètre nominal de la portée cylindrique filetée auto-taraudeuse (1a), c'est-à-dire filet compris, est de 6,9 mm ce qui permet de faire un perçage de 6 mm dans le béton, avec un foret standard, tout en s'affranchissant de l'utilisation d'une cheville, et en garantissant une résistance accrue du piton (1).

**Revendications**

1. Piton (1) comprenant une portée cylindrique filetée auto-taraudeuse (1a), dont une extrémité présente une tête (2) agencée pour le vissage d'une tige filetée apte à recevoir un élément, tel qu'une ossature pour faux plafond, le piton (1) est soumis à un traitement de dureté du type carbonitruration pour être vissé directement dans du béton sans l'utilisation d'une cheville, *caractérisé* **en ce que** le diamètre nominal de la portée cylindrique filetée auto-taraudeuse (1a) est de 6,9 mm.

2. Piton (1) selon la revendication 1, *caractérisé* **en ce que** la longueur de la portée cylindrique filetée auto-taraudeuse (1a) est de 35 mm.

3. Piton (1) selon la revendication 1, *caractérisé* **en ce que** le pas du filet de la portée cylindrique filetée auto-taraudeuse (1a) est de 3,2 mm.

4. Piton (1) selon la revendication 1, *caractérisé* **en ce qu'**il comprend une pointe définissant un angle de 45°.

5. Piton (1) selon la revendication 1, *caractérisé* **en ce que** la tête (2) pour le vissage d'une tige filetée est du type femelle, en étant constituée par portée hexagonale (2a) présentant un taraudage interne (2b) pour le vissage de ladite tige.

6. Piton (1) selon la revendication 1, *caractérisé* **en ce que** la tête (2) pour le vissage d'une tige filetée est du type mâle, en étant constituée par une portée cylindrique filetée pour le vissage de ladite tige, une portée hexagonale étant formée entre ladite portée cylindrique filetée et la portée cylindrique filetée auto-taraudeuse (1a).

**Patentansprüche**

1. Aufhänger (1) bestehend aus einem selbstschneidenden, zylindrischen Gewindeschaft (1a), wobei ein Ende einen Kopf (2) aufweist, der zum Einschrauben einer Gewindestange eingerichtet ist, die ein Element wie ein Gerüst für eine abgehängte Decke aufnehmen kann, wobei der Aufhänger (1) einer Härtebehandlung wie der Carbonitrierung unterzogen wird, um direkt in Beton ohne Verwendung eines Dübels eingeschraubt zu werden, **dadurch gekennzeichnet, dass** der Nenndurchmesser des selbstschneidenden, zylindrischen Gewindeschafts (1a) 6,9 mm beträgt.

2. Aufhänger (1) nach Anspruch 1, **dadurch gekennzeichnet, dass** die Länge des selbstschneidenden, zylindrischen Gewindeschafts (1a) 35 mm beträgt.

3. Aufhänger (1) nach Anspruch 1, **dadurch gekennzeichnet, dass** die Gewindesteigung des selbstschneidenden, zylindrischen Gewindeschafts (1a) 3,2 mm beträgt.

4. Aufhänger (1) nach Anspruch 1, **dadurch gekennzeichnet, dass** er eine Spitze mit einem Winkel von 45° aufweist.

5. Aufhänger (1) nach Anspruch 1, **dadurch gekennzeichnet, dass** der Kopf (2) zum Einschrauben einer Gewindestange vom weiblichen Typ ist, bestehend aus einem sechseckigen Abschnitt (2a) mit einem Innengewinde (2b) zum Einschrauben der genannten Stange.

6. Aufhänger (1) nach Anspruch 1, **dadurch gekennzeichnet, dass** der Kopf (2) zum Einschrauben einer Gewindestange vom männlichen Typ ist, bestehend aus einem zylindrischen Gewindeabschnitt zum Einschrauben der genannten Stange, wobei ein sechseckiger Abschnitt zwischen dem genannten zylindrischen Gewindeabschnitt und dem selbstschneidenden, zylindrischen Gewindeschaft (1a) ausgebildet ist.

**Claims**

1. Hanger (1) comprising a self-tapping threaded cylindrical shank (1a), with one end having a head (2) arranged for screwing in a threaded rod capable of receiving an element such as a framework for a suspended ceiling, wherein the hanger (1) undergoes a hardness treatment, such as carbonitriding, to be screwed directly into concrete without using an anchor, **characterized in that** the nominal diameter of the self-tapping threaded cylindrical shank (1a) is 6.9 mm.

2. Hanger (1) according to Claim 1, **characterized in that** the length of the self-tapping threaded cylindrical shank (1a) is 35 mm.

3. Hanger (1) according to Claim 1, **characterized in that** the thread pitch of the self-tapping threaded cylindrical shank (1a) is 3.2 mm.

4. Hanger (1) according to Claim 1, **characterized in that** it includes a tip defining a 45° angle.

5. Hanger (1) according to Claim 1, **characterized in that** the head (2) for screwing in a threaded rod is of the female type, consisting of a hexagonal portion (2a) with an internal thread (2b) for screwing in said rod.

6. Hanger (1) according to Claim 1, **characterized in that** the head (2) for screwing in a threaded rod is of the male type, consisting of a threaded cylindrical portion for screwing in said rod, with a hexagonal portion formed between said threaded cylindrical portion and the self-tapping threaded cylindrical shank (1a).

[Fig. 1]

[Fig. 2]

[Fig. 3]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3038354

- FR 2521235